# EUROPEAN PATENT SPECIFICATION

(11) **EP 3 628 839 B1**
(45) Date of publication and mention of the grant of the patent: **20.03.2024**
(21) Application number: 19200272.3
(22) Date of filing: 27.09.2019
(51) Int. Cl.: F02B 37/00, F02B 53/08, F02B 53/14, F01C 11/00, F01C 20/02, F01C 21/00, F02B 41/10, F02B 55/16

(54) **ENGINE ASSEMBLY WITH MULTIPLIE ROTARY ENGINE STACKS**
MOTORANORDNUNG MIT MEHREREN DREHMOTORSTAPELN
ENSEMBLE MOTEUR AYANT DE MULTIPLES EMPILEMENTS DE MOTEUR ROTATIF

(30) Priority: 27.09.2018 US 201862737328 P; 23.05.2019 US 201916420630
(43) Date of publication of application: 01.04.2020
(73) Proprietor: Pratt & Whitney Canada Corp., Longueuil, Québec J4G 1A1 (CA)
(72) Inventor: FONTAINE, Mike, Longueuil, Québec J4G 1A1 (CA); BOLDUC, Sebastien, Longueuil, Québec J4G 1A1 (CA); VILLENEUVE, Bruno, Longueuil, Québec J4G 1A1 (CA); JULIEN, Andre, Longueuil, Québec J4G 1A1 (CA); THOMASSIN, Jean, Longueuil, Québec J4G 1A1 (CA); GAGNON - MARTIN, David, Longueuil, Québec J4G 1A1 (CA); DUSSAULT, Serge, Longueuil, Québec J4G 1A1 (CA)
(74) Representative: Dehns

(56) References cited:
- EP-A1- 3 059 417
- EP-A1- 3 106 644
- WO-A2-2007/017867
- US-A1- 2016 376 022
- US-B2- 8 695 565

## Description

### TECHNICAL FIELD

The application relates generally to engine assemblies and, more particularly, to engine assemblies including multiple rotary engines.

### BACKGROUND OF THE ART

Rotary engines, such as for example Wankel engines, use the eccentric rotation of piston to convert pressure into a rotating motion, instead of using reciprocating pistons. Depending on the power requirements different number of rotary units can be axially assembled to drive a common eccentric shaft. However, the assembly of multiple rotary units has been proven to be challenging from a structural point of view.

WO 2007/017867 A2 discloses improvements to Wankel and similar rotary engines, EP 3 106 644 A1 discloses a compound cycle engine, US 2016/376022 A1 discloses an auxiliary power unit with excess air recovery, US 8 695 565 B2 discloses a co-axial rotary engine, and EP 3 059 417 A1 discloses an engine assembly with a modular compressor and turbine.

### SUMMARY

In one aspect of the present invention, there is provided an engine assembly as set forth in claim 1.

Embodiments of the disclosure are set forth in the dependent claims.

### DESCRIPTION OF THE DRAWINGS

Reference is now made to the accompanying figures in which:
Fig. 1a is a block diagram of a compound cycle engine having two stacks of four rotary modules in accordance with a particular embodiment;
Fig. 1b is a top view of the compound cycle engine shown in Fig. 1a,
Fig. 1c is an isometric view of the compound cycle engine shown in Figs. 1a and 1b;
Fig. 2 is a cross-sectional view of a rotary module which can be used in a compound cycle engine such as shown in Figs. 1a, 1b and 1c;
Fig. 3a is a block diagram of a compound cycle engine having two stacks of three rotary modules mounted in-line with a turbine pack in accordance with a particular embodiment;
Fig. 3b is an isometric view of the compound cycle engine shown in Fig. 3a;
Fig. 4a is a block diagram of a compound cycle engine having two stacks of three rotary modules mounted in parallel to a compressor-turbine pack, thereby forming a three barrel engine architecture;
Fig. 4b is an isometric view of a multi-stack engine having a turbine mounted in-line with a compressor.

### DETAILED DESCRIPTION

The present description includes both compound engine assemblies and turbocharged engine assemblies comprising an engine core having multiple stacks/barrels of intermittent internal combustion engines drivingly connected to a common load, including, but not limited to, one or more generator(s), propeller(s), helicopter rotor(s), accessory(ies), rotor mast(s), compressor(s), or any other appropriate type of load or combination thereof. In a particular embodiment, the intermittent internal combustion engines are rotary internal combustion engines, for example Wankel engines.

Engine assemblies can be configured to have a plurality of such rotary engines to accommodate various power requirements for a given size of rotor. The applicant has found that when more than four rotary internal combustion engines are assembled in line, the engine carcass bending and bearing alignment can be an issue and negatively impact the service life of the engines.

Therefore, when multiple rotary engines are required (e.g. more than four), the rotary engines can be grouped into multiple barrels or stacks of rotary engines (two or more stacks) joined with a common gearbox or transmission to power the load. As will be seen hereinafter, the stacks of rotary engines can share a common turbocompounding system (i.e. geared to the rotary stacks) or each stack can have a dedicated compressor with common turbines, or vice versa, and all various combinations or permutations thereof. The turbocompounding system can be composed of a compressor section, a turbine section, and an accessory gearbox (AGB) with fuel, oil, and coolant pumps.

In a particular embodiment, the engine assembly comprises compounding system such as described in Lents et al.'s US patent No. 7,753,036 issued July 13, 2010 or as described in Julien et al.'s US patent No. 7,775,044 issued August 17, 2010, or as described in Thomassin et al.'s U.S. patent publication No. 2015/0275749 published October 1, 2015, or as described in Bolduc et al.'s U.S. patent publication No. 2015/0275756 published October 1, 2015.

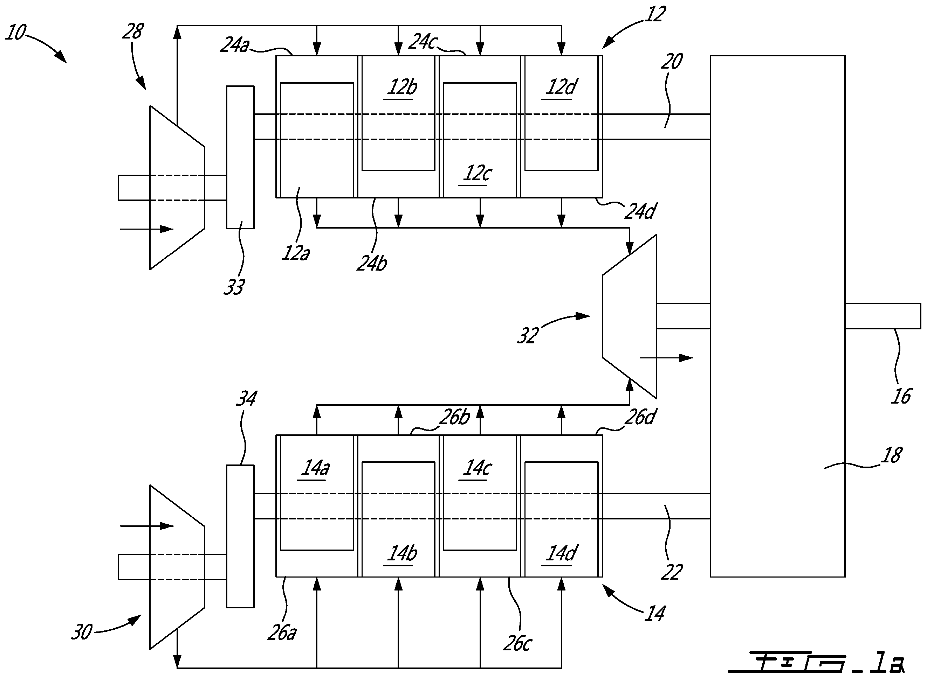

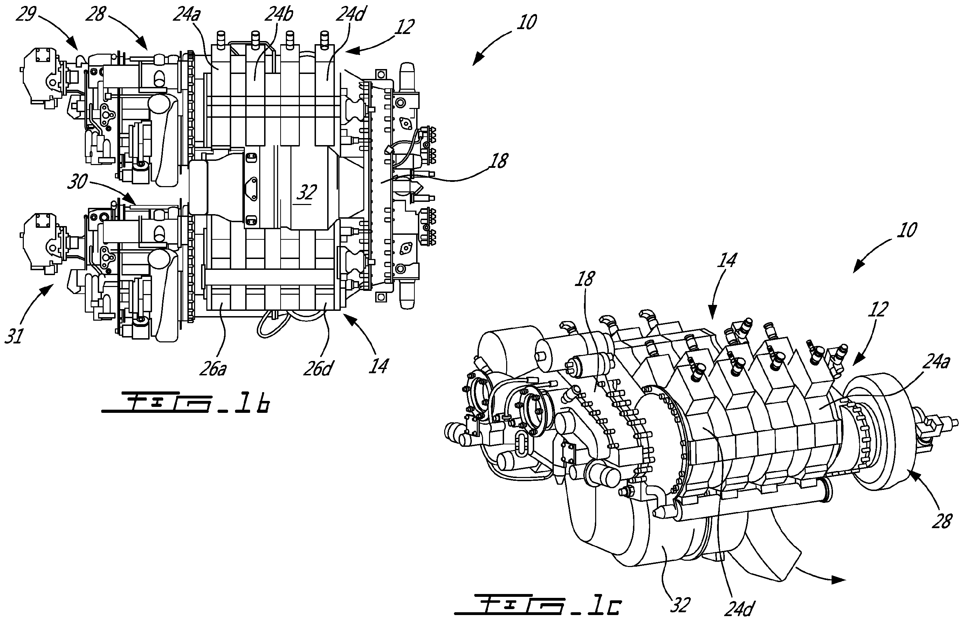

Referring to Figs. 1a, 1b and 1c, a compound cycle engine assembly 10 is generally shown and includes an engine core having multiple stacks of rotors 12, 14 (2 stacks of 4 rotors according to the illustrated example) drivingly connected together via a common gearbox 18 to drive a common load 16. As can be appreciated from Figs. 1b and 1c, the stacks 12, 14 can be mounted in parallel (e.g. side-by-side or one on top of the other) and connected at one end thereof to a gearbox 18.

The individual stacks 12, 14 can be provided in the form of multi-rotor engine assemblies. For example, as schematically shown in Fig. 1a, the stacks 12, 14 may each include 2, 3 or 4 rotors 12a, 12b, 12c, 12d, 14a, 14b, 14c and 14d journaled on a respective eccentric portion of a common crankshaft 20, 22 for eccentric revolution within respective housings 24a, 24b, 24c, 24d, 26a, 26b, 26c, and 26d . Each rotor and associated housing form a distinct rotary module with its own intake and exhaust ports. Accordingly, a stack may comprise two, three or four similar axially aligned rotary modules driving a common eccentric shaft. While the illustrated embodiment includes a same number of rotary modules per stack, it is understood that different number of rotary modules could be provided per stack (e.g. one stack could have three modules while the other stacks could have four modules).

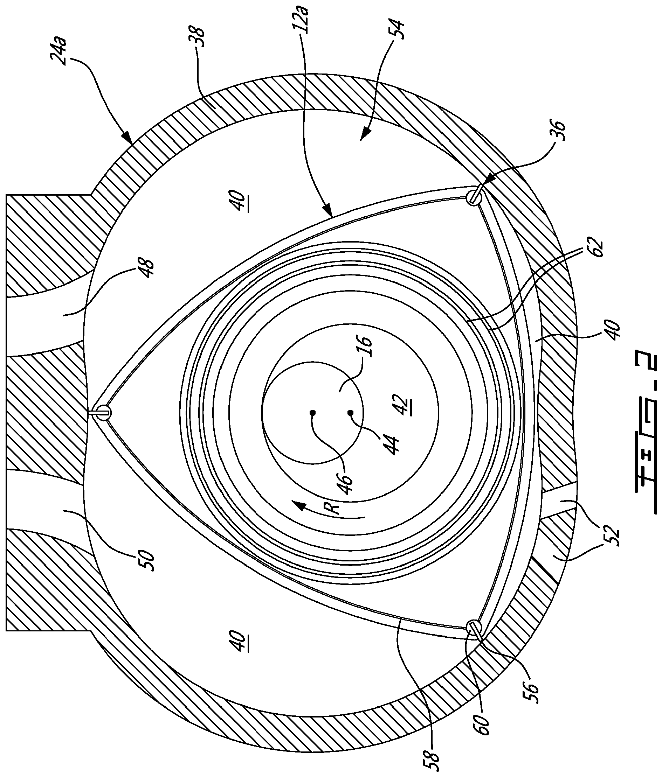

Fig. 2 illustrates an example of a representative rotary module forming part of the rotor stacks 12, 14 shown in Fig. 1a. More particularly, the housing 24a defines a rotor cavity having a profile defining two lobes, which is preferably an epitrochoid. The rotor 12a is received within the rotor cavity. The rotor defines three circumferentially-spaced apex portions 36, and a generally triangular profile with outwardly arched sides. The apex portions 36 are in sealing engagement with the inner surface of a peripheral wall 38 of the housing 24a to form and separate three working chambers 40 of variable volume between the rotor 12a and the housing 24a. The peripheral wall 38 extends between two axially spaced apart end walls 54 to enclose the rotor cavity.

The rotor 12a is engaged to an associated eccentric portion 42 of the crankshaft 20 to perform orbital revolutions within the rotor cavity. The shaft 20 performs three rotations for each orbital revolution of the rotor 12a. The geometrical axis 44 of the rotor 12a is offset from and parallel to the axis 46 of the housing 24a. During each orbital revolution, each chamber 40 varies in volume and moves around the rotor cavity to undergo the four phases of intake, compression, expansion and exhaust.

An intake port 48 is provided through the peripheral wall 38 for admitting compressed air into one of the working chambers 40. An exhaust port 50 is also provided through the peripheral wall 38 for discharge of the exhaust gases from the working chambers 40. Passages 52 for a spark plug, glow plug or other ignition mechanism, as well as for one or more fuel injectors of a fuel injection system (not shown) are also provided through the peripheral wall 38. Alternately, the intake port 48, the exhaust port 50 and/or the passages 52 may be provided through the end or side wall 54 of the housing. A sub-chamber (not shown) may be provided in communication with the chambers 40, for pilot or pre injection of fuel for combustion. It is understood that placement of ports, number and placement of seals, etc., may vary from that of the embodiment shown.

For efficient operation, the working chambers 40 are sealed by spring-loaded peripheral or apex seals 56 extending from the rotor 12a to engage the inner surface of the peripheral wall 38, and spring-loaded face or gas seals 58 and end or corner seals 60 extending from the rotor 12a to engage the inner surface of the end walls 54. The rotor 12a also includes at least one spring-loaded oil seal ring 62 biased against the inner surface of the end wall 54 around the bearing for the rotor 34 on the shaft eccentric portion 42.

The fuel injector(s), which in a particular embodiment are common rail fuel injectors, communicate with a source of Heavy fuel (e.g. diesel, kerosene (jet fuel), equivalent biofuel), and deliver the heavy fuel into the housing such that the combustion chamber is stratified with a rich fuel-air mixture near the ignition source and a leaner mixture elsewhere.

Referring back to Figs. 1a, 1b and 1c, the compound engine assembly 10 includes a compressor section feeding compressed air to the engine core (corresponding to or communicating with the inlet port of the rotary modules in the rotor stacks). According to this particular embodiment, each stack of rotors has a dedicated compressor 28, 30 mounted at the end of the stacks 12, 14 opposite to gearbox 18. However, it is understood that the stacks 12, 14 could be fed by a common compressor (i.e. one compressor feeding both stacks of rotors). As schematically illustrated by the flow arrows in Fig. 1a, the first compressor 28 has an outlet in fluid communication with the inlet of rotor housings 24a, 24b, 24c and 24d of the first rotor stack 12. Likewise, the second compressor 30 has an outlet in fluid communication with the inlet of the rotor housings 26a, 26b, 26c and 26d of the second rotor stack 14. The rotary modules in stacks 12, 14 receive the pressurized air from their associated compressor 28, 30 and burns fuel at high pressure to provide energy. Mechanical power produced by the rotary engines drives the crankshaft 20, 22 in each stack 12, 14. The rotary module in stacks 12,14 provide an exhaust flow in the form of exhaust pulses of high pressure hot gas exiting at high peak velocity.

The outlet of the engine core (corresponding to or communicating with the exhaust port of each rotary module in each rotor stack) is in fluid communication with an inlet of a turbine section/pack 32, and accordingly the exhaust flow from the engine core is supplied to the turbine section 32. In the particular embodiment illustrated in Figs. 1a, 1b and 1c, both rotor stacks 12, 14 are in fluid flow communication with a common turbine section 32 mounted between the two rotor stacks 12, 14. There is, thus, provided a one turbine pack for two rotor stacks 12, 14. It is understood that the turbine section 32 can adopt various configurations. For instance, it can comprise one, two or multiple axial or radial stages. In a particular embodiment (not shown), the turbine section includes a first stage turbine having an outlet in fluid communication with an inlet of a second stage turbine, with the turbines having different reaction ratios from one another. The first stage turbine may be configured to take benefit of the kinetic energy of the pulsating flow exiting the engine core while stabilizing the flow and the second stage turbine may be configured to extract energy from the remaining pressure in the flow.

As schematically shown in Fig. 1a, the turbine section 32 is compounded with the first and second rotor stacks 12, 14 via gearbox 18 to provide a common output. The compressors 28, 30 may be driven by one or more of the turbines of the turbine sections and/or the stacks of the rotary engines and/or via an external source, such as an electric motor. In the particular embodiment illustrated in Figs. 1a, 1b and 1c, the first compressor 28 and the second compressor 30 are respectively driven by the first and second rotor stacks 12, 14 via respective transmissions 33, 34. The transmissions 33, 34 can adopt various forms. For instance, the transmissions 33, 34 could be configured to provide fixed or different discrete speed ratios between the compressor shaft and the crankshafts 20, 22. Alternatively, the compressors 28, 30, which are normally equipped with a stage of variable inlet guide vanes (VIGV)to adjust the boost pressure ratio, can be connected to the respective rotor stacks 12, 14 with a continuously variable transmission (CVT) to allow compressor variation in speed independent of the rotary speed for even more boost pressure adjustment (with or without VIGV). With a CVT, the driving engagement between the compressor shafts and shafts 20, 22 is configured to provide a plurality of different speed ratios between the compressors and the shaft of the associated rotor stacks.

As can be appreciated from Fig. 1b, stacks 12, 14 can have dedicated accessory gearboxes (AGB) 29, 31 and associated equipment (e.g. pumps and the like). The AGBs 29, 31 can be mounted to the casings of compressors 28, 30 at one end of the engine assembly 10 opposite compounding gearbox 18. According to another embodiment, the rotor stacks 12, 14 could share a common AGB.

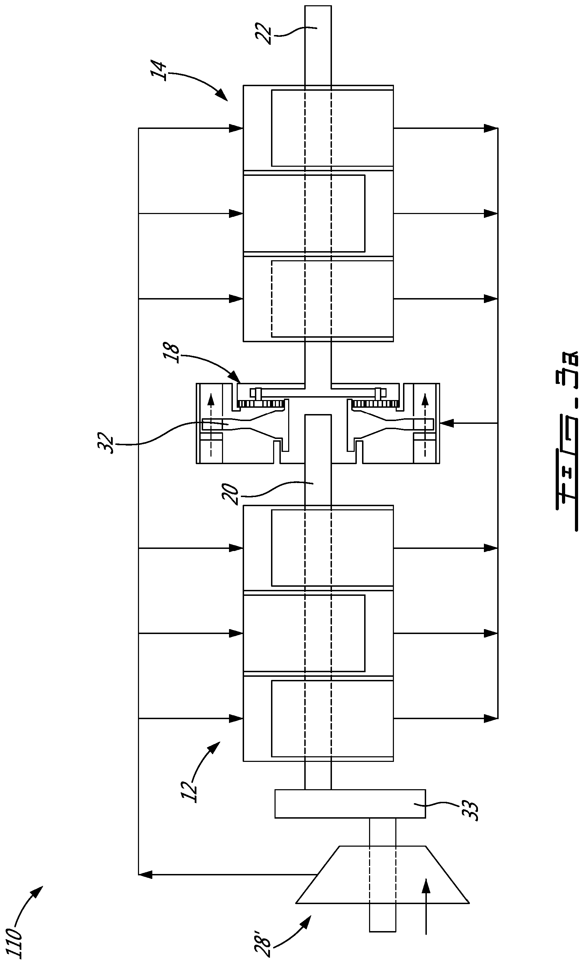

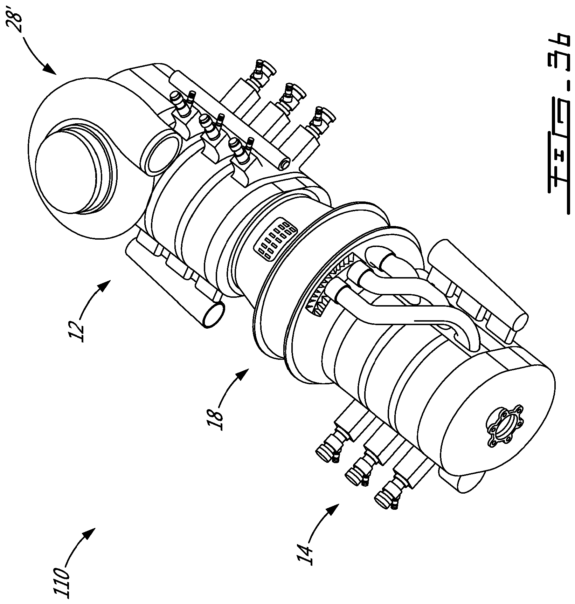

Referring to Figs. 3a and 3b, a compound cycle engine assembly 110 according to another embodiment is schematically shown, where elements similar to those of the previously described engine assembly 10 are identified by the same reference numerals and will not be further herein described.

In this embodiment, two stacks 12, 14 of 3 rotary modules are mounted in-line with the turbine pack along an engine centerline. Again, it is noted that the rotor stacks could have a different number of rotary modules. For instance, the first stack 12 could have two rotary modules and the second stack 14 could have three rotary modules. It is also understood that various other combinations are herein contemplated. In this embodiment, the turbine pack including power turbine 32 is disposed and geared between the first and second rotor stacks 12, 14. The gearbox 18 is also disposed axially between the two rotor stacks 12, 14. The turbine 32 is compounded with the rotor stacks 12, 14 via gearbox 18. Unlike the embodiment disclosed in Figs. 1a, 1b and 1c, the rotor stacks 12, 14 are fed with compressed air from a common compressor 28' mounted at one end of the engine assembly 110. The compressor 28' can be geared to the whole assembly or connected thereto via a CVT transmission 33 or other types of transmissions as described hereinbefore. In the particular embodiment illustrated in Fig. 3a, the compressor 28' is drivingly connected to the crankshaft 20 of the first rotor stack 12 via transmission 33. Other driving sources for the compressor 28' are contemplated as well.

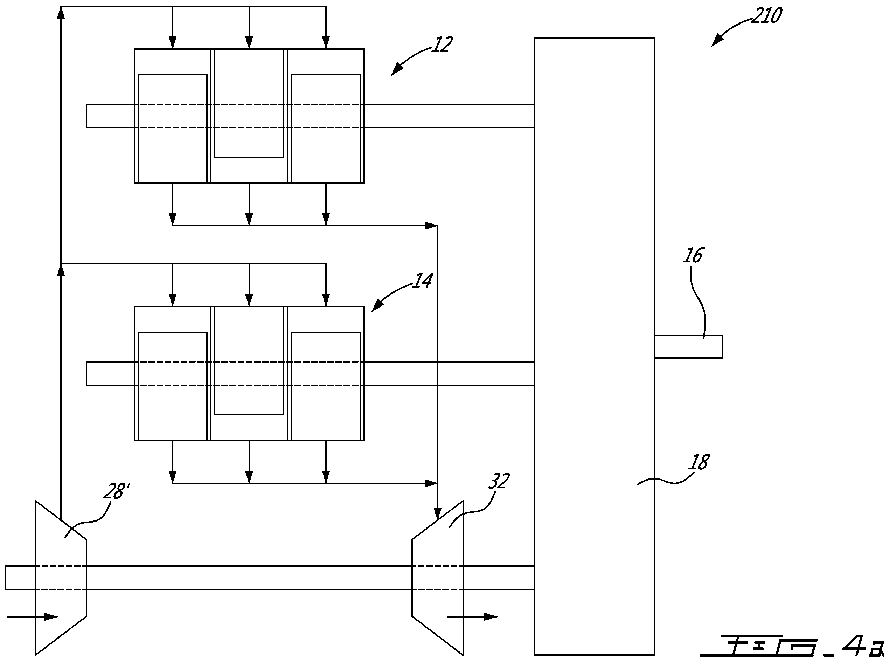

Referring to Fig 4a, a compound cycle engine assembly 210 according to another embodiment is schematically shown, where elements similar to those of the previously described engine assembly 10 are identified by the same reference numerals and will not be further herein described.

In this embodiment, the turbine pack is mounted directly with the compressor 28' in parallel to the rotor stacks 12, 14. The compressor 28' is driven by the turbine 32. The compressor 28' and the turbine 32 can be mounted on the same shaft as shown in Fig. 4a or, alternatively, drivingly connected to the turbine via by a transmission, such as a gearbox. The compressor 28' feeds compressed air to both rotor stacks 12, 14. The turbine 32 is geared to the rotor stacks of two, three or four rotors (3 in Fig. 4a) each, creating a three barrel configuration (2 rotary barrels of two, three or four rotors and 1 barrel of a compressor coupled with a turbine pack (with one, two or multiple axial or radial stage combinations).

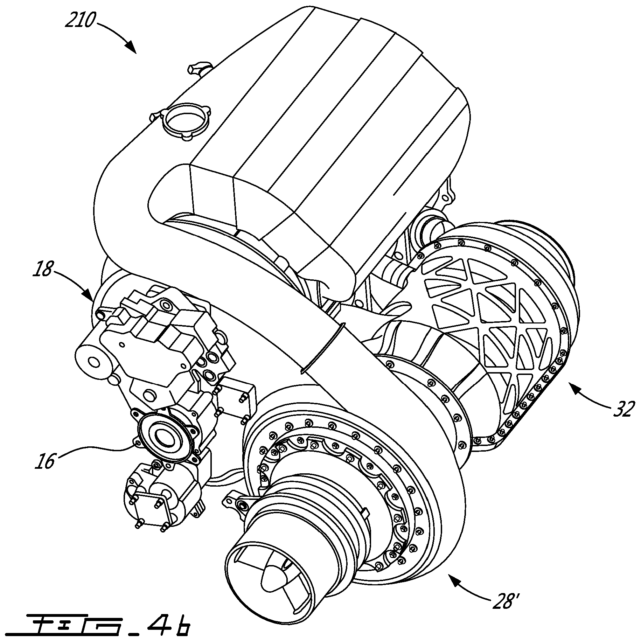

As shown in Fig. 4b, the engine accessory gearbox (AGB) can be combined with the compounding gearbox joining two rotary stacks 12, 14 or can be individual on each stack, or some pumps of the AGB can be common for all, but some for each individual stack. The compressor and the turbine can be mounted in line.

The compressor for all the above described embodiments can be either a single stage radial or multiple stages axial or a combination of them in any number. An intercooler (not shown) can be provided between the compressor section and the rotary modules of the rotary stacks 12, 14. The intercooler can be either common or individual for each stack.

Also according to a further embodiment, the engine assembly could comprise a compressor - turbine pack, which is not geared to the rotor stacks 12, 14 but separate to act like a turbocharger rather than a turbcompounding system. According to a further variant of a turbocharger embodiment, an additional turbine pack could be connected aerodynamically (i.e. fed from the turbocharger exhaust gas), but mechanically connected to the rotary stacks 12, 14 via a gearbox or continuous variable transmission (CVT) to add some turbocompounding. The latter can alternatively be done to drive an electrical generator to give some form of an electric hybrid configuration, or the generator can be mounted on the turbocharger, mechanically disconnected from the rotary assembly to do the turbocompounding electrically.

The above description is meant to be exemplary only, and one skilled in the art will recognize that changes may be made to the embodiments described without departing from the scope of the invention disclosed. For instance, an engine assembly could have a separate turbine for each barrel or stack of rotary engines. Modifications which fall within the scope of the present invention will be apparent to those skilled in the art, in light of a review of this disclosure, and such modifications are intended to fall within the appended claims.

## Claims

1. An engine assembly (10; 110; 210) comprising:
an engine core having at least two stacks (12, 14) of rotary internal combustion engines drivingly connected together via a gearbox (18) to drive a common load (16), wherein each of the at least two stacks (12, 14) comprises a plurality of rotors (12a, 12b, 12c, 12d, 14a, 14b, 14c, 14d) mounted to a common crankshaft (20, 22) inside respective housings (24a, 24b, 24c, 24d, 26a, 26b, 26c, 26d), the plurality of rotors (12a...14d) mounted for eccentric revolutions within the respective housings (24a... 26d), and each housing (24a ... 26d) having intake and exhaust ports (48, 50);
a compressor section having an outlet in fluid communication with an inlet of the engine core; and
a turbine section (32) having an inlet in fluid communication with an outlet of the engine core, wherein the turbine section (32) comprises a power turbine (32) configured to compound power with the at least two stacks (12, 14) of rotary internal combustion engines via the gearbox (18).

2. The engine assembly (10; 210) defined in claim 1, wherein the at least two stacks (12, 14) of rotary internal combustion engines are parallel, and the turbine section (32) is disposed between the at least two stacks (12, 14) of rotary internal combustion engines.

3. The engine assembly (110) defined in claim 1, wherein the at least two stacks (12, 14) of rotary internal combustion engines are axially aligned, and the turbine section (32) is disposed axially between the at least two stacks (12, 14) of rotary internal combustion engines.

4. The engine assembly (110; 210) defined in any of claims 1 to 3, wherein the rotary internal combustion engines of the at least two stacks (12,14) of rotary internal combustion engines are fluidly connected to a same compressor (28') of the compressor section.

5. The engine assembly (110) defined in any of claims 1 to 3, wherein the at least two stacks (12, 14) of rotary internal combustion engines are fed with compressed air from a common compressor (28') of the compressor section, and said compressor (28') is drivingly connected to one of said at least two stacks (12, 14) of rotary internal combustion engine via a transmission (33).

6. The engine assembly (110; 210) defined in any of claims 1 to 5, wherein the at least two stacks (12, 14) of rotary internal combustion engines share a or the common compressor (28') and a common turbine (32), the common compressor (28') forming part of the compressor section, the common turbine (32) forming part of the turbine section, and the common turbine (32) is drivingly connected to the common compressor (28').

7. The engine assembly (10) defined in claim 1 or 2, wherein the compressor section comprises at least a first compressor (28) and a second compressor (30), the first compressor (28) having a first outlet in fluid communication with respective inlets of the rotary internal combustion engines of a first one (12) of the at least two stacks (12, 14) of rotary internal combustion engines, and the second compressor (30) has a second outlet in fluid communication with respective inlets of the rotary internal combustion engines of a second one (14) of the at least two stacks (12, 14) of rotary internal combustion engines.

8. The engine assembly (10) defined in claim 7, wherein the first stack (12) of rotary internal combustion engines is drivingly connected to the first compressor (28) via a first transmission (33), and the second stack (14) of rotary internal combustion engines is drivingly connected to the second compressor (30) via a second transmission (34).

9. The engine assembly (10; 110; 210) defined in any preceding claim, wherein the power turbine (32) is drivingly connected to the engine core via the common gearbox (18).

10. The engine assembly (10; 110; 210) defined in any preceding claim, wherein the at least two stacks (12, 14) of rotary internal combustion engines are all fluidly connected to the same turbine (32) of the turbine section (32).

11. The engine assembly defined in any one of claims 1 to 9, wherein the at least two stacks (12, 14) of rotary internal combustion engines are fluidly connected to different turbines (32) of the turbine section (32).

12. The engine assembly (10; 110; 210) defined in any preceding claim, wherein the rotors (12a, 12b, 12c, 12d, 14a, 14b, 14c, 14d) are sealingly and rotationally received within respective housings (24a, 24b, 24c, 24d, 26a, 26b, 26c, 26d) to provide rotating chambers (40) of variable volume in the respective housings (24a...26d), the respective rotors (12a... 14d) having three apex portions (36) separating the rotating chambers (40).

## Patentansprüche

1. Motoranordnung (10; 110; 210), umfassend:
einen Motorkern, der mindestens zwei Stapel (12, 14) von Drehverbrennungsmotoren aufweist, die über ein Getriebe (18) antriebsmäßig miteinander verbunden sind, um eine gemeinsame Last (16) anzutreiben, wobei jeder der mindestens zwei Stapel (12, 14) eine Vielzahl von Rotoren (12a, 12b, 12c, 12d, 14a, 14b, 14c, 14d) umfasst, die an einer gemeinsamen Kurbelwelle (20, 22) in jeweiligen Gehäusen (24a, 24b, 24c, 24d, 26a, 26b, 26c, 26d) montiert ist, wobei die Vielzahl von Rotoren (12a... 14d) für exzentrische Umdrehungen innerhalb der jeweiligen Gehäuse (24a...26d) montiert ist und jedes Gehäuse (24a...26d) Einlass- und Auslassöffnungen (48, 50) aufweist;
einen Kompressorabschnitt, der einen Auslass aufweist, der in Fluidverbindung mit einem Einlass des Motorkerns steht; und
einen Turbinenabschnitt (32), der einen Einlass aufweist, der in Fluidverbindung mit einem Auslass des Motorkerns steht, wobei der Turbinenabschnitt (32) eine Leistungsturbine (32) umfasst, die dazu konfiguriert ist, Leistung mit den mindestens zwei Stapeln (12, 14) von Drehverbrennungsmotoren über das Getriebe (18) zu verbinden.

2. Motoranordnung (10; 210) nach Anspruch 1, wobei die mindestens zwei Stapel (12, 14) von Drehverbrennungsmotoren parallel sind und der Turbinenabschnitt (32) zwischen den mindestens zwei Stapeln (12, 14) von Drehverbrennungsmotoren angeordnet ist.

3. Motoranordnung (110) nach Anspruch 1, wobei die mindestens zwei Stapel (12, 14) von Drehverbrennungsmotoren axial ausgerichtet sind und der Turbinenabschnitt (32) axial zwischen den mindestens zwei Stapeln (12, 14) von Drehverbrennungsmotoren angeordnet ist.

4. Motoranordnung (110; 210) nach einem der Ansprüche 1 bis 3, wobei die Drehverbrennungsmotoren der mindestens zwei Stapel (12, 14) von Drehverbrennungsmotoren fluidisch mit demselben Kompressor (28') des Kompressorabschnitts verbunden sind.

5. Motoranordnung (110) nach einem der Ansprüche 1 bis 3, wobei die mindestens zwei Stapel (12, 14) von Drehverbrennungsmotoren mit Druckluft von einem gemeinsamen Kompressor (28') des Kompressorabschnitts gespeist werden und der Kompressor (28') mit einem der mindestens zwei Stapel (12, 14) von Drehverbrennungsmotoren über ein Getriebe (33) antriebsmäßig verbunden ist.

6. Motoranordnung (110; 210) nach einem der Ansprüche 1 bis 5, wobei die mindestens zwei Stapel (12, 14) von Drehverbrennungsmotoren sich einen gemeinsamen Kompressor (28') und eine gemeinsame Turbine (32) teilen, wobei der gemeinsame Kompressor (28') einen Teil des Kompressorabschnitts bildet, die gemeinsame Turbine (32) einen Teil des Turbinenabschnitts bildet und die gemeinsame Turbine (32) antriebsmäßig mit dem gemeinsamen Kompressor (28') verbunden ist.

7. Motoranordnung (10) nach Anspruch 1 oder 2, wobei der Kompressorabschnitt mindestens einen ersten Kompressor (28) und einen zweiten Kompressor (30) umfasst, wobei der erste Kompressor (28) einen ersten Auslass aufweist, der in Fluidverbindung mit entsprechenden Einlässen der Drehverbrennungsmotoren eines ersten (12) der mindestens zwei Stapel (12, 14) von Drehverbrennungsmotoren steht, und der zweite Kompressor (30) einen zweiten Auslass aufweist, der in Fluidverbindung mit entsprechenden Einlässen der Drehverbrennungsmotoren eines zweiten (14) der mindestens zwei Stapel (12, 14) von Drehverbrennungsmotoren steht.

8. Motoranordnung (10) nach Anspruch 7, wobei der erste Stapel (12) von Drehverbrennungsmotoren über ein erstes Getriebe (33) antriebsmäßig mit dem ersten Kompressor (28) verbunden ist und der zweite Stapel (14) von Drehverbrennungsmotoren über ein zweites Getriebe (34) antriebsmäßig mit dem zweiten Kompressor (30) verbunden ist.

9. Motoranordnung (10; 110; 210) nach einem der vorhergehenden Ansprüche, wobei die Leistungsturbine (32) über das gemeinsame Getriebe (18) antriebsmäßig mit dem Motorkern verbunden ist.

10. Motoranordnung (10; 110; 210) nach einem der vorhergehenden Ansprüche, wobei die mindestens zwei Stapel (12, 14) von Drehverbrennungsmotoren alle fluidisch mit derselben Turbine (32) des Turbinenabschnitts (32) verbunden sind.

11. Motoranordnung nach einem der Ansprüche 1 bis 9, wobei die mindestens zwei Stapel (12, 14) von Drehverbrennungsmotoren fluidisch mit unterschiedlichen Turbinen (32) des Turbinenabschnitts (32) verbunden sind.

12. Motoranordnung (10; 110; 210) nach einem der vorhergehenden Ansprüche, wobei die Rotoren (12a, 12b, 12c, 12d, 14a, 14b, 14c, 14d) abdichtend und drehbar in jeweiligen Gehäusen (24a, 24b, 24c, 24d, 26a, 26b, 26c, 26d) aufgenommen sind, um rotierende Kammern (40) mit variablem Volumen in den jeweiligen Gehäusen (24a... 26d) bereitzustellen, wobei die jeweiligen Rotoren (12a... 14d) drei Scheitelabschnitte (36) aufweisen, die die rotierenden Kammern (40) trennen.

## Revendications

1. Ensemble moteur (10 ; 110 ; 210) comprenant :
un noyau de moteur présentant au moins deux empilements (12, 14) de moteurs à combustion interne rotatifs reliés ensemble par entraînement via une boîte de vitesses (18) pour entraîner une charge commune (16), dans lequel chacun des au moins deux empilements (12, 14) comprend une pluralité de rotors (12a, 12b, 12c, 12d, 14a, 14b, 14c, 14d) montés sur un vilebrequin commun (20, 22) à l'intérieur de boîtiers respectifs (24a, 24b, 24c, 24d, 26a, 26b, 26c, 26d), la pluralité de rotors (12a à 14d) étant montés pour des révolutions excentriques à l'intérieur des boîtiers respectifs (24a à 26d), et chaque boîtier (24a à 26d) ayant des orifices d'admission et d'échappement (48, 50) ;
une section de compresseur ayant une sortie en communication fluidique avec une entrée du noyau de moteur ; et
une section de turbine (32) ayant une entrée en communication fluidique avec une sortie du noyau de moteur, dans lequel la section de turbine (32) comprend une turbine de puissance (32) configurée pour combiner la puissance avec les au moins deux empilements (12, 14) de moteurs à combustion interne rotatifs via la boîte de vitesses (18).

2. Ensemble moteur (10 ; 210) défini selon la revendication 1, dans lequel les au moins deux empilements (12, 14) de moteurs à combustion interne rotatifs sont parallèles, et la section de turbine (32) est disposée entre les au moins deux empilements (12, 14) de moteurs à combustion interne rotatifs.

3. Ensemble moteur (110) défini selon la revendication 1, dans lequel les au moins deux empilements (12, 14) de moteurs à combustion interne rotatifs sont axialement alignés, et la section de turbine (32) est disposée axialement entre les au moins deux empilements (12, 14) de moteurs à combustion interne rotatifs.

4. Ensemble moteur (110 ; 210) défini selon l'une quelconque des revendications 1 à 3, dans lequel les moteurs à combustion interne rotatifs des au moins deux empilements (12, 14) de moteurs à combustion interne rotatifs sont reliés fluidiquement à un même compresseur (28') de la section de compresseur.

5. Ensemble moteur (110) défini selon l'une quelconque des revendications 1 à 3, dans lequel les au moins deux empilements (12, 14) de moteurs à combustion interne rotatifs sont alimentés en air comprimé provenant d'un compresseur commun (28') de la section de compresseur, et ledit compresseur (28') est relié par entraînement à l'un desdits au moins deux empilements (12, 14) de moteur à combustion interne rotatif via une transmission (33) .

6. Ensemble moteur (110 ; 210) défini selon l'une quelconque des revendications 1 à 5, dans lequel les au moins deux empilements (12, 14) de moteurs à combustion interne rotatifs partagent un ou le compresseur commun (28') et une turbine commune (32), le compresseur commun (28') faisant partie de la section de compresseur, la turbine commune (32) faisant partie de la section de turbine, et la turbine commune (32) est reliée par entraînement au compresseur commun (28').

7. Ensemble moteur (10) défini selon la revendication 1 ou 2, dans lequel la section de compresseur comprend au moins un premier compresseur (28) et un second compresseur (30), le premier compresseur (28) présentant une première sortie en communication fluidique avec des entrées respectives des moteurs à combustion interne rotatifs d'un premier empilement (12) des au moins deux empilements (12, 14) de moteurs à combustion interne rotatifs, et le second compresseur (30) présente une seconde sortie en communication fluidique avec des entrées respectives des moteurs à combustion interne rotatifs d'un second empilement (14) des au moins deux empilements (12, 14) de moteurs à combustion interne rotatifs.

8. Ensemble moteur (10) défini selon la revendication 7, dans lequel le premier empilement (12) de moteurs à combustion interne rotatifs est relié par entraînement au premier compresseur (28) via une première transmission (33), et le second empilement (14) de moteurs à combustion interne rotatifs est relié par entraînement au second compresseur (30) via une seconde transmission (34).

9. Ensemble moteur (10 ; 110 ; 210) défini selon une quelconque revendication précédente, dans lequel la turbine de puissance (32) est reliée par entraînement au noyau de moteur via la boîte de vitesses commune (18).

10. Ensemble moteur (10 ; 110 ; 210) défini selon une quelconque revendication précédente, dans lequel les au moins deux empilements (12, 14) de moteurs à combustion interne rotatifs sont tous reliés fluidiquement à la même turbine (32) de la section de turbine (32).

11. Ensemble moteur défini selon l'une quelconque des revendications 1 à 9, dans lequel les au moins deux empilements (12, 14) de moteurs à combustion interne rotatifs sont reliés fluidiquement à différentes turbines (32) de la section de turbine (32).

12. Ensemble moteur (10 ; 110 ; 210) défini selon une quelconque revendication précédente, dans lequel les rotors (12a, 12b, 12c, 12d, 14a, 14b, 14c, 14d) sont reçus de manière étanche et rotative à l'intérieur de boîtiers respectifs (24a, 24b, 24c, 24d, 26a, 26b, 26c, 26d) pour fournir des chambres rotatives (40) de volume variable dans les boîtiers respectifs (24a à 26d), les rotors respectifs (12a à 14d) ayant trois parties sommitales (36) séparant les chambres rotatives (40).
